# EUROPÄISCHE PATENTSCHRIFT

(11) **EP 2 144 778 B1**
(45) Veröffentlichungstag und Bekanntmachung des Hinweises auf die Patenterteilung: **27.06.2012**
(21) Anmeldenummer: 08758197.1
(22) Anmeldetag: 06.05.2008
(51) Int. Cl.: B60K 20/04

(54) **SCHALTVORRICHTUNG EINES KRAFTFAHRZEUGES UND MONTAGEVERFAHREN HIERFÜR**
GEAR-SHIFT DEVICE OF A MOTOR VEHICLE AND CORRESPONDING MOUNTING METHOD
DISPOSITIF DE COMMANDE DES VITESSES POUR VÉHICULE AUTOMOBILE ET PROCÉDÉ DE MONTAGE DE CE DISPOSITIF

(30) Priorität: 07.05.2007 DE 102007021834
(43) Veröffentlichungstag der Anmeldung: 20.01.2010
(73) Patentinhaber: ZF Friedrichshafen AG, 88038 Friedrichshafen (DE)
(72) Erfinder: FORTMANN, Wolfgang, 49163 Bohmte (DE); BODEN, Wolfgang, 49393 Lohne (DE)
(86) Internationale Anmeldenummer: PCT/DE2008/050010
(87) Internationale Veröffentlichungsnummer: WO 2008/135042

(56) Entgegenhaltungen:
- CH-A- 482 122
- US-A- 4 270 403
- US-A- 4 364 450
- US-A- 4 527 913
- US-A- 6 038 939

## Beschreibung

Die Erfindung betrifft eine Schaltvorrichtung für ein Getriebe eines Kraftfahrzeuges, insbesondere eines PKW, aufweisend ein Schaltgehäuse mit einer Bodenplatte, durch welche eine Schaltverbindung zwischen Schaltvorrichtung und Getriebe verläuft, welche als untere äußere Abdeckung einer Schaltkonsole des Kraftfahrzeuges dient. Weiterhin betrifft die Erfindung auch ein Montageverfahren für die zuvor genannte Schaltvorrichtung.

Bezüglich einer ähnlichen Schaltvorrichtung wir auf die Druckschrift DE 199 53 958 A1 verwiesen. Diese Druckschrift offenbart eine Schaltvorrichtung zur Betätigung eines Fahrzeuggetriebes mit einem Schaltgehäuse und einer Bodenplatte, durch die die Bowdenzüge verlaufen, wobei die gesamte Einheit von Schaltgehäuse mit Bodenplatte an der Bodengruppe des Fahrzeuges befestigt wird. Die Druckschrift US 4 2 70403 zeigt eine Schaltvorrichtung mit allen Merkmalen des Oberbegriffs des Anspruchs 1.

Eine solche Kombination zwischen Bodenplatte und Schaltvorrichtung ist sehr montagefreundlich, erzeugt jedoch unter Umständen das Problem, dass Toleranzen im Bereich der Bodengruppe über die Befestigung der Schaltvorrichtung nur schwer beziehungsweise aufwendig auszugleichen sind, so dass sich diese Toleranzen in den Bereich der Mittelkonsole fortsetzen können, so dass die Schaltvorrichtung nicht mehr optimal zentriert im Bereich der Mittelkonsole platziert ist, beziehungsweise nur mit relativ großem Aufwand ausgerichtet werden kann.

Es ist daher Aufgabe der Erfindung, eine Schaltvorrichtung mit an der Bodengruppe des Fahrzeuges montierbaren Bodenplatte darzustellen, die eine genauere Positionierung der Schaltvorrichtung relativ zur Mittelkonsole erlaubt, ohne die Montagevorteile zu vernachlässigen. Des Weiteren ist es Aufgabe der Erfindung, ein Montageverfahren anzugeben, welches eine zuverlässige und schnelle Montage dieser zuvor genannten Schaltvorrichtung in einem Kraftfahrzeug ermöglicht.

Diese Aufgaben der Erfindung werden durch die Merkmale der unabhängigen Patentansprüche gelöst. Besondere Ausbildungen der Erfindung sind in den sich anschließenden Unteransprüchen und auch in der Figurenbeschreibung angegeben.

Die Erfinder haben erkannt, dass ein Kompromiss zwischen einfacher Montagemöglichkeit einer Schaltvorrichtung inklusive Bodenplatte innerhalb einer einzigen Baugruppe nur dann möglich ist, wenn eine einfach lösbare Verbindung zwischen einer Bodenplatte und der Schaltvorrichtung geschaffen wird, so dass eine gemeinsame Lieferung von Bodenplatte und Schaltvorrichtung in einer einzigen Baugruppe möglich ist, eine Montage der gesamten Baugruppe in einem Stück stattfinden kann und anschließend durch Lösen einer Verbindung zwischen der Bodenplatte und der Schaltvorrichtung dafür sorgt, dass eine positionsgenaue Anbringung der Schaltvorrichtung über separate Verbindungsmittel relativ zur Mittelkonsole durchgeführt werden kann.

Entsprechend diesem Grundgedanken schlagen die Erfinder vor, die an sich bekannte Schaltvorrichtung für ein Getriebe eines Kraftfahrzeuges, insbesondere eines PKWs, aufweisend ein Schaltgehäuse mit einer Bodenplatte, durch welche eine Schaltverbindung zwischen Schaltvorrichtung und Getriebe verläuft, welche an der Bodengruppe des Kraftfahrzeuges montiert wird, dahingehend zu verbessern, dass die Bodenplatte lösbar mit dem in sich geschlossen ausgebildeten Schaltgehäuse verbunden ist und eine einzige Montageeinheit darstellt.

Die Verbindung zwischen Schaltgehäuse und Bodenplatte kann in einfacher Weise mit Hilfe einer Verschraubung durchgeführt werden, wobei die Bodenplatte und das Schaltgehäuse derart miteinander verschraubt werden können, dass die Schraubverbindung von oben aus der Schaltkonsole lösbar ist. Hierdurch ist es möglich, die Bodenplatte bei der Montage von unten an der Bodengruppe des Fahrzeuges fest zu montieren, während später beim Aufbau der Mittelkonsole diese Schraubverbindung von oben gelöst werden kann und dabei das Schaltgehäuse positionsgenau relativ zur Schaltkonsole mit dieser verbunden werden kann.

Anstelle einer Schraubverbindung kann auch eine Steckverbindung zwischen Bodenplatte und Schaltgehäuse verwendet werden, wobei sich diese zum Beispiel durch ein Anheben des Schaltgehäuses relativ zur Bodenplatte oder ein Verschieben des Schaltgehäuses löst, so dass anschließend wieder eine positionsgenaue Montage des Schaltgehäuses ohne Rücksicht auf die Bodenplatte durchführbar ist.

Eine besonders günstige Variante des Aufbaus der erfindungsgemäßen Schaltvorrichtung kann darin bestehen, dass die Bodenplatte mit dem Schaltgehäuse über mindestens einen Clip, vorzugsweise über genau einen Clip, verbunden ist. Hierbei kann die Bodenplatte mindestens ein erstes Eingriffs- und Rastelement aufweisen, das Schaltgehäuse mindestens ein zweites Eingriffs- und Rastelement aufweisen, wobei der mindestens eine Clip in jeweils einander zugeordnete erste und zweite Eingriffs- und Rastelemente eingreifen und einrasten kann, um die Bodenplatte mit dem Schaltgehäuse zu verbinden und eine einzige Montageeinheit zu erzeugen, die erst später für die Justierung der Schaltvorrichtung gelöst wird.

Vorteilhaft ist es weiterhin, wenn der mindestens eine Clip derart angeordnet ist, dass ein Entfernen durch die Schaltkonsole möglich ist.

Außerdem kann die Bodenplatte als Abschluss der Bodengruppe nach Außen, also zur unteren Abdeckung des Raumes oder Schachtes, in dem sich die Schaltvorrichtung befindet, verwendet werden.

Neben der optimalen Montagemöglichkeit weist diese Bauweise zusätzlich den Vorteil einer akustischen Entkopplung zwischen der Bodengruppe und der Schaltvorrichtung selbst auf, da nun keine direkte Verbindung mehr zwischen diesen beiden Baugruppen bestehen und dadurch die Übertragung von Schwingungen von der Bodengruppe ins Innere des Fahrzeuges wesentlich erschwert wird.

Neben der erfindungsgemäßen Schaltvorrichtung schlagen die Erfinder auch eine Verbesserung des Montageverfahrens für eine Schaltvorrichtung, vorzugsweise eine Schaltvorrichtung der hier beschriebenen Art, vor, wobei diese Montage die folgenden Verfahrensschritte aufweist:
- erzeugen einer Montageeinheit aus einer Bodenplatte und einem Schaltgehäuse, wobei die Bodenplatte und das Schaltgehäuse lösbar miteinander verbunden sind,
- einbringen der Montageeinheit in einen hierfür vorgesehenen Schacht einer Schaltkonsole bei der Hochzeit zwischen Motor-/Getriebe- und Fahrwerkseinheit und Befestigen der Bodenplatte an der Fahrwerkseinheit,
- zeitversetztes lösen der Verbindung zwischen Bodenplatte und Schaltgehäuse,
- befestigen des Schaltgehäuses an der Schaltkonsole.

Ergänzend kann zum Lösen der Verbindung zwischen Bodenplatte und Schaltgehäuse das Schaltgehäuse aus mindestens einer Steckverbindung zur Bodenplatte gehoben werden oder es kann zum Lösen der Verbindung zwischen Bodenplatte und Schaltgehäuse mindestens ein Clip gezogen werden, der die Bodenplatte mit dem Schaltgehäuse verbindet.

Durch dieses Montageverfahren bleibt eine sehr einfache Montage von Bodenplatte mit Schaltvorrichtung erhalten, wobei die Bodenplatte gleichzeitig als Abschluss in der Bodengruppe nach außen dienen kann und gleichzeitig ermöglicht dieses Montageverfahren eine sehr positionsgenaue Montage der Schaltvorrichtung relativ zur Mittelkonsole, wobei Toleranzen im Bereich der Bodengruppe nicht in diesen Bereich übertragen werden.

Im Folgenden wird die Erfindung anhand eines bevorzugten Ausführungsbeispieles mit Hilfe der Figuren näher beschrieben, wobei nur die zum Verständnis der Erfindung notwendigen Merkmale dargestellt sind.

Es zeigen im Einzelnen:
- FIG 1:: Seitliche 3D-Ansicht einer erfindungsgemäßen Schaltvorrichtung mit Bodenplatte;
- FIG 2:: Seitenansicht einer Schaltvorrichtung mit Bodenplatte im miteinander verbundenen Zustand;
- FIG 3:: Schaltvorrichtung mit Bodenplatte mit Teil der Bodengruppe und Teil der Mittelkonsole im eingesetzten Zustand.

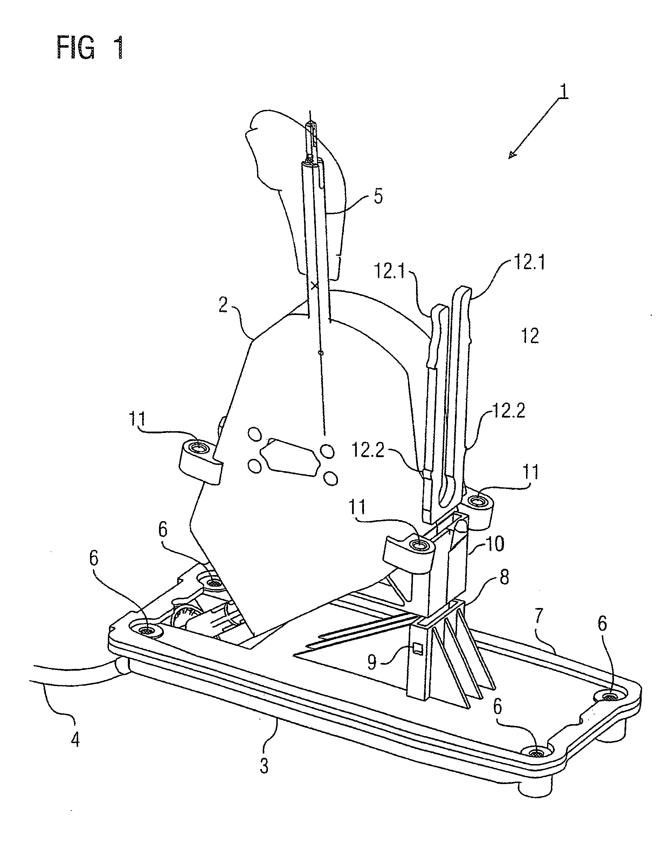

Die Figur 1 zeigt eine erfindungsgemäße Schaltvorrichtung 1 bestehend aus einem Gehäuse 2 mit einem darin befindlichen Schalthebel 5. An dem Gehäuse 2 befinden sich vier Laschen mit Bohrungen 11 zur Verbindung des Schaltgehäuses mit der Mittelkonsole. Im vorderen beziehungsweise rechten Teil des Schaltgehäuses 2 befindet sich ein herausgezogener Clip 12, der in eine Lasche 10 eingeführt wird und in der darunter angeordneten Bodengruppe 3 in einen Kanal 8 mit einer Rastierung 9 eingeführt werden kann. Sobald dieser Clip 12, der ähnlich einer Stimmgabel ausgebildet ist, eingeführt ist, schnappen die Rastierungen 12.2 der beiden Gabeln 12.1 des Clips 12 in die Rastierung 9 ein, so dass eine feste Verbindung zwischen dem Schaltgehäuse und der Bodenplatte 3 erzeugt wird. Im hinteren Bereich der Schaltvorrichtung führt ein Bowdenzug 4 von der Schaltvorrichtung 1 weg, durch einen Durchbruch in der Bodenplatte 3 hindurch, die mit dem Getriebe verbunden wird. In dem hier dargestellten Beispiel einer Verbindung der Schaltvorrichtung mit der Bodenplatte dient der Bowdenzug 4 zusätzlich als Stabilisierung beim Transport der gesamten Montageeinheit. Die Bodenplatte 3 selbst weist vier Schraubbohrungen 6 auf, mit der die Bodenplatte 3 abgedichtet über eine Dichtung 7 direkt mit der Bodengruppe verschraubt werden kann, so dass eine Vormontage dieser Montageeinheit auf einfache Weise durchgeführt werden kann.

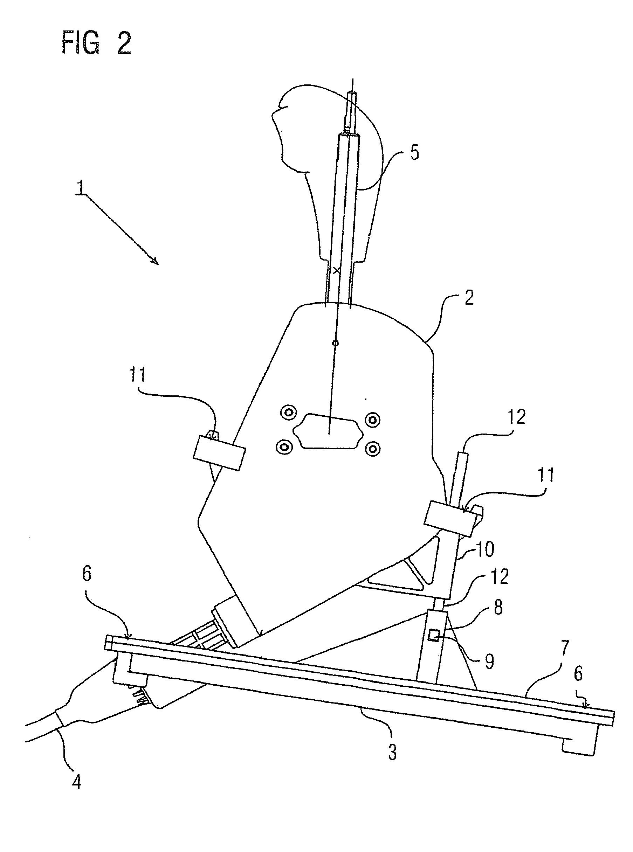

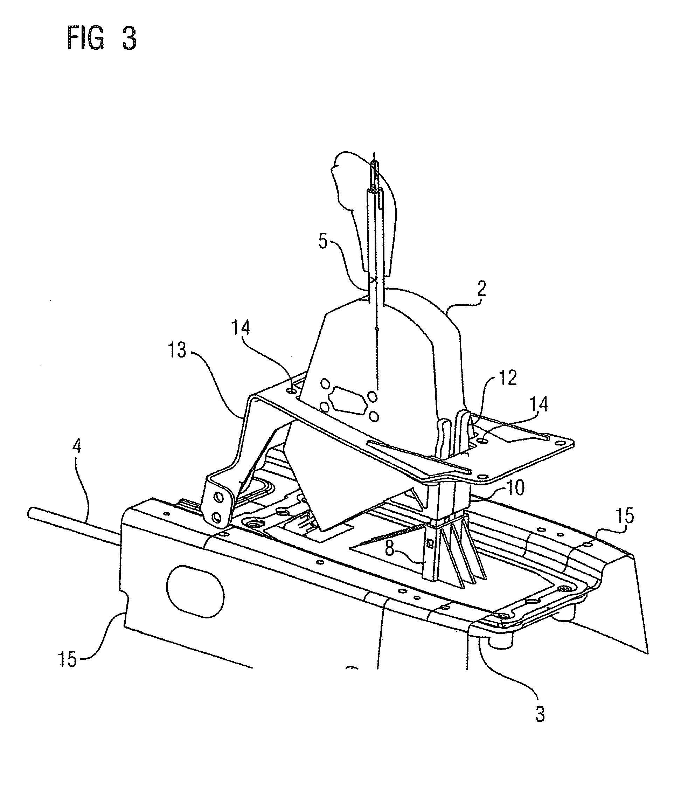

In der Figur 2 ist die Schaltvorrichtung 1 nochmals in Seitenansicht dargestellt, wobei hier der Clip 12 eingerastet ist und das Schaltgehäuse 2 fest mit der Bodenplatte 3 verbunden ist. Die Figur 3 zeigt schließlich nochmals eine 3D-Schrägansicht einer bereits von unten in eine Bodengruppe eingesetzte Schaltvorrichtung, wobei die Bodenplatte 3 nun mit dem hier gezeigten Teil 15 der Bodengruppe verschraubt werden kann.

Zu einem späteren Zeitpunkt besteht dann die Möglichkeit, den Clip 12 nach oben heraus zu ziehen, so dass die Verbindung des Schaltgehäuses 2 zur Bodenplatte 3 aufgehoben wird. Danach kann das Schaltgehäuse 2 passgenau über die Bohrungen 14, die mit den Schraubbohrungen 11 des Schaltgehäuses korrespondieren, ausgerichtet werden, so dass eine genau justierte Montage des Schaltgehäuses mit seinem Schalthebel 5 relativ zur Mittelkonsole des Fahrzeuges stattfinden kann.

Da am Ende dieser Montage keine feste Verbindung mehr zwischen der Bodengruppe und dem Schaltgehäuse 2 beziehungsweise mit dem damit verbundenen Schalthebel 5 besteht, wird auch die Übertragung akustisch störender Geräusche beziehungsweise die Übertragung von Vibrationen auf den Schalthebel 5 erschwert, so dass insgesamt eine gute Isolierung des Fahrzeuginnenraums gegenüber der Bodengruppe entsteht.

Insgesamt wird also durch diese Erfindung eine sehr montagefreundliche Schaltvorrichtung einschließlich eines einfachen und flexiblen Montageverfahrens vorgestellt, wobei zusätzlich der Vorteil einer akustischen Entkopplung zwischen Bodengruppe und Innenraum verwirklicht wird.

Es wird darauf hingewiesen, dass im Rahmen der Erfindung auch eine mechanische Umkehr der beschriebenen Funktionen der einzelnen mechanischen Elemente liegt.

### Bezugszeichenliste

- 1: Schaltvorrichtung
- 2: Schaltgehäuse
- 3: Bodenplatte
- 4: Bowdenzug
- 5: Schalthebel
- 6: Schraubbohrungen
- 7: Dichtung
- 8: Kanal
- 9: Rastierung
- 10: Lasche
- 11: Schraubbohrungen am Schaltgehäuse
- 12: Clip
- 12.1: Cliparme
- 12.2: Rastierungen an den Cliparmen
- 13: Blech der Mittelkonsole
- 14: Bohrung
- 15: Teil der Bodengruppe

## Patentansprüche

1. Schaltvorrichtung (1) für ein Getriebe eines Kraftfahrzeuges, insbesondere eines PKW, aufweisend ein Schaltgehäuse (2) mit einer Bodenplatte (3), durch welche eine Schaltverbindung (4) zwischen der Schaltvorrichtung (1) und dem Getriebe verlaufen kann, welche an eine Bodengruppe (15) des Kraftfahrzeuges montierbar ist,
**dadurch gekennzeichnet, dass**
die Bodenplatte (3) lösbar mit dem in sich geschlossen ausgebildeten Schaltgehäuse (2) verbunden ist und eine einzige Montageeinheit darstellt.

2. Schaltvorrichtung gemäß dem voranstehenden Anspruch 1,
**dadurch gekennzeichnet, dass**
die Bodenplatte (3) und das Schaltgehäuse (2) miteinander verschraubt sind.

3. Schaltvorrichtung gemäß dem voranstehenden Anspruch 2,
**dadurch gekennzeichnet, dass**
die Bodenplatte (3) und das Schaltgehäuse (2) derart miteinander verschraubt sind, dass die Schraubverbindung von oben durch die Schaltkonsole (13) lösbar ist.

4. Schaltvorrichtung gemäß dem voranstehenden Anspruch 1,
**dadurch gekennzeichnet, dass**
die Bodenplatte (3) mit dem Schaltgehäuse (2) durch mindestens eine Steckverbindung verbunden ist.

5. Schaltvorrichtung gemäß dem voranstehenden Anspruch 1,
**dadurch gekennzeichnet, dass**
die Bodenplatte (3) mit dem Schaltgehäuse (2) über mindestens einen Clip (12) verbunden ist.

6. Schaltvorrichtung gemäß dem voranstehenden Anspruch 5,
**dadurch gekennzeichnet, dass**
die Bodenplatte (3) mindestens ein erstes Eingriffs- und Rastelement (8) aufweist, das Schaltgehäuse (2) mindestens ein zweites Eingriffs- und Rastelement (10) aufweist, wobei der mindestens eine Clip (12) in jeweils einander zugeordnete erste und zweite Eingriffs- und Rastelemente (8, 10) eingreifen und einrasten kann, um die Bodenplatte (3) mit dem Schaltgehäuse (2) zu verbinden.

7. Schaltvorrichtung gemäß einem der voranstehenden Ansprüche 5 bis 6,
**dadurch gekennzeichnet, dass**
der mindestens eine Clip (12) derart angeordnet ist, dass ein Entfernen durch die Schaltkonsole (13) hindurch möglich ist.

8. Schaltvorrichtung gemäß einem der voranstehenden Ansprüche 1 bis 7,
**dadurch gekennzeichnet, dass**
die Bodenplatte (3) einen Abschluss nach Außen an der Bodengruppe (15) darstellt.

9. Montageverfahren für eine Schaltvorrichtung, vorzugsweise eine Schaltvorrichtung gemäß einem der Ansprüche 1 bis 8,
**gekennzeichnet, durch** folgende Verfahrensschritte:
- erzeugen einer Montageeinheit aus einer Bodenplatte (3) und einem Schaltgehäuse (2), wobei die Bodenplatte (3) und das in sich geschlossene Schaltgehäuse (2) lösbar miteinander verbunden sind,
- einbringen der Montageeinheit in einen hierfür vorgesehenen Schacht einer Schaltkonsole bei der Hochzeit zwischen Motor-/Getriebe- und Fahrwerkseinheit und Befestigen der Bodenplatte (3) an der Fahrwerkseinheit,
- zeitversetztes lösen der Verbindung zwischen Bodenplatte (3) und Schaltgehäuse (2),
- befestigen des Schaltgehäuses (2) an der Schaltkonsole (13).

10. Montageverfahren gemäß dem voranstehenden Anspruch 9,
**dadurch gekennzeichnet, dass**
zum Lösen der Verbindung zwischen Bodenplatte (3) und Schaltgehäuse (2) mindestens eine Schraubverbindung aufgeschraubt wird.

11. Montageverfahren gemäß dem voranstehenden Anspruch 9,
**dadurch gekennzeichnet, dass**
zum Lösen der Verbindung zwischen Bodenplatte (3) und Schaltgehäuse (2) das Schaltgehäuse (2) aus mindestens einer Steckverbindung zur Bodenplatte (3) gehoben wird.

12. Montageverfahren gemäß dem voranstehenden Anspruch 9,
**dadurch gekennzeichnet, dass**
zum Lösen der Verbindung zwischen Bodenplatte (3) und Schaltgehäuse (2) mindestens ein Clip (12) gezogen wird, der die Bodenplatte (3) mit dem Schaltgehäuse (2) verbindet.

## Claims

1. Gear-shift device (1) for a gearbox of a motor vehicle, in particular of a passenger vehicle, having a gear-shift housing (2) with a floor plate (3) through which a gear-shift connection (4) between the gear-shift device (1) and the gearbox can run and which can be mounted onto a floor assembly (15) of the motor vehicle, **characterized in that** the floor plate (3) is connected releasably to the gear-shift housing (2), which is of self-contained design, and constitutes a single mounting unit.

2. Gear-shift device according to the preceding Claim 1, **characterized in that** the floor plate (3) and the gear-shift housing (2) are bolted to each other.

3. Gear-shift device according to the preceding Claim 2, **characterized in that** the floor plate (3) and the gear-shift housing (2) are bolted to each other in such a manner that the bolted connection can be released from above through the gear-shift console (13).

4. Gear-shift device according to the preceding Claim 1, **characterized in that** the floor plate (3) is connected to the gear-shift housing (2) by at least one plug-in connection.

5. Gear-shift device according to the preceding Claim 1, **characterized in that** the floor plate (3) is connected to the gear-shift housing (2) via at least one clip (12).

6. Gear-shift device according to the preceding Claim 5, **characterized in that** the floor plate (3) has at least one first engagement and latching element (8), and the gear-shift housing (2) has at least one second engagement and latching element (10), wherein the at least one clip (12) can engage and latch into first and second engagement and latching elements (8, 10), which are each assigned to one another in order to connect the floor plate (3) to the gear-shift housing (2).

7. Gear-shift device according to either of the preceding Claims 5 and 6, **characterized in that** the at least one clip (12) is arranged in such a manner that removal through the gear-shift console (13) is possible.

8. Gear-shift device according to one of the preceding Claims 1 to 7, **characterized in that** the floor plate (3) constitutes an outward termination on the floor assembly (15).

9. Mounting method for a gear-shift device, preferably a gear-shift device according to one of Claims 1 to 8, **characterized by** the following method steps:
- producing a mounting unit consisting of a floor plate (3) and a gear-shift housing (2), wherein the floor plate (3) and the self-contained-gear-shift housing (2) are connected releasably to each other,
- introducing the mounting unit into a designated shaft in a gear-shift console during the marriage between the engine/gearbox and chassis unit and fastening the floor plate (3) to the chassis unit,
- releasing, with a time delay, the connection between the floor plate (3) and gear-shift housing (2),
- fastening the gear-shift housing (2) to the gear-shift console (13).

10. Mounting method according to the preceding Claim 9, **characterized in that**, in order to release the connection between the floor plate (3) and gear-shift housing (2), at least one bolted connection is unbolted.

11. Mounting method according to the preceding Claim 9, **characterized in that**, in order to release the connection between the floor plate (3) and gear-shift housing (2), the gear-shift housing (2) is lifted out of at least one plug-in connection with respect to the floor plate (3).

12. Mounting method according to the preceding Claim 9, **characterized in that**, in order to release the connection between the floor plate (3) and gear-shift housing (2), at least one clip (12) which connects the floor plate (3) to the gear-shift housing (2) is stretched.

## Revendications

1. Dispositif de changement de vitesses (1) pour une boîte de vitesses d'un véhicule automobile, en particulier d'un véhicule léger, présentant un boîtier de changement de vitesses (2) avec une plaque de base (3) à travers laquelle une liaison de changement de vitesses (4) peut être guidée entre le dispositif de changement de vitesses (1) et la boîte de vitesses, laquelle liaison peut être montée sur un groupe de plancher (15) du véhicule automobile,
**caractérisé en ce que**
la plaque de base (3) est connectée de manière amovible au boîtier de changement de vitesses (2) réalisé sous forme fermée en soi, et constitue une unité de montage individuelle.

2. Dispositif de changement de vitesses selon la revendication précédente 1,
**caractérisé en ce que**
la plaque de base (3) et le boîtier de changement de vitesses (2) sont vissés l'un à l'autre.

3. Dispositif de changement de vitesses selon la revendication précédente 2,
**caractérisé en ce que**
la plaque de base (3) et le boîtier de changement de vitesses (2) sont vissés l'un à l'autre de telle sorte que la liaison par vissage puisse être desserrée par le haut par la console de changement de vitesses (13).

4. Dispositif de changement de vitesses selon la revendication précédente 1,
**caractérisé en ce que**
la plaque de base (3) est connectée au boîtier de changement de vitesses (2) par au moins une connexion par enfichage.

5. Dispositif de changement de vitesses selon la revendication précédente 1,
**caractérisé en ce que**
la plaque de base (3) est connectée au boîtier de changement de vitesses (2) par le biais d'au moins un clip (12).

6. Dispositif de changement de vitesses selon la revendication précédente 5,
**caractérisé en ce que**
la plaque de base (3) présente au moins un premier élément d'engagement et d'encliquetage (8), le boîtier de changement de vitesses (2) présente au moins un deuxième élément d'engagement et d'encliquetage (10), l'au moins un clip (12) pouvant s'engager et s'encliqueter dans des premier et deuxième éléments d'engagement et d'encliquetage (8, 10) respectifs associés l'un à l'autre, afin de connecter la plaque de base (3) au boîtier de changement de vitesses (2).

7. Dispositif de changement de vitesses selon l'une quelconque des revendications précédentes 5 à 6,
**caractérisé en ce que**
l'au moins un clip (12) est disposé de telle sorte qu'un enlèvement soit possible à travers la console de changement de vitesses (13).

8. Dispositif de changement de vitesses selon l'une quelconque des revendications précédentes 1 à 7,
**caractérisé en ce que**
la plaque de base (3) constitue une terminaison vers l'extérieur sur le groupe de plancher (15).

9. Procédé de montage pour un dispositif de changement de vitesses, de préférence un dispositif de changement de vitesses selon l'une quelconque des revendications 1 à 8,
**caractérisé par** les étapes de procédé suivantes :
- création d'une unité de montage à partir d'une plaque de base (3) et d'un boîtier de changement de vitesses (2), la plaque de base (3) et le boîtier de changement de vitesses (2) fermé en soi étant raccordés l'un à l'autre de manière amovible,
- introduction de l'unité de montage dans un conduit prévu à cet effet d'une console de changement de vitesses lors de l'accouplement entre les unités de moteur, boîte de vitesses et châssis, et fixation de la plaque de base (3) à l'unité de châssis,
- desserrage retardé de la connexion entre la plaque de base (3) et le boîtier de changement de vitesses (2),
- fixation du boîtier de changement de vitesses (2) sur la console de changement de vitesses (13) .

10. Procédé de montage selon la revendication précédente 9,
**caractérisé en ce que**
pour le desserrage de la connexion entre la plaque de base (3) et le boîtier de changement de vitesses (2), au moins une connexion à vis est vissée.

11. Procédé de montage selon la revendication précédente 9,
**caractérisé en ce que**
pour le desserrage de la connexion entre la plaque de base (3) et le boîtier de changement de vitesses (2), le boîtier de changement de vitesses (2) est soulevé depuis au moins une connexion par enfichage à la plaque de base (3).

12. Procédé de montage selon la revendication précédente 9,
**caractérisé en ce que**
pour le desserrage de la connexion entre la plaque de base (3) et le boîtier de changement de vitesses (2), on retire au moins un clip (12) qui relie la plaque de base (3) au boîtier de changement de vitesses (2).
